Europäisches Patentamt

European Patent Office

Office européen des brevets

(11) Veröffentlichungsnummer: **0 216 300 B1**

# EUROPÄISCHE PATENTSCHRIFT

(45) Veröffentlichungstag der Patentschrift: **15.04.92**

(21) Anmeldenummer: **86112819.7**

(22) Anmeldetag: **17.09.86**

(51) Int. Cl.⁵: **B32B 27/32**, B32B 31/30, B32B 33/00

(54) **Mehrschichtige, biaxial orientierte Polypropylen-Trennfolie, Verfahren zur Herstellung der Folie und ihre Verwendung.**

(30) Priorität: **25.09.85 DE 3534100**

(43) Veröffentlichungstag der Anmeldung:
**01.04.87 Patentblatt 87/14**

(45) Bekanntmachung des Hinweises auf die
Patenterteilung:
**15.04.92 Patentblatt 92/16**

(84) Benannte Vertragsstaaten:
**BE DE FR GB IT NL**

(56) Entgegenhaltungen:
**DE-A- 3 216 603**
**DE-A- 3 247 999**
**DE-A- 3 513 526**

(73) Patentinhaber: **HOECHST AKTIENGESELL-
SCHAFT
Postfach 80 03 20
W-6230 Frankfurt am Main 80(DE)**

(72) Erfinder: **Crass, Günther
Bachstrasse 7
W-6204 Taunusstein 4(DE)**
Erfinder: **Hammerschmidt, Peter
Münzenbergstrasse 20
W-6200 Wiesbaden(DE)**
Erfinder: **Bothe, Lothar, Dr.
Kurt-Schumacher-Strasse 69E
W-6500 Mainz-Gonsenheim(DE)**

**Beschreibung**

Die Erfindung betrifft eine dreischichtige, biaxial orientierte Polypropylen-Trennfolie aus einer Basisschicht und zwei Deckschichten, wobei die beiden Deckschichten im wesentlichen die gleiche Zusammensetzung und die gleiche Dicke aufweisen.

Die Erfindung betrifft ferner ein Verfahren zur Herstellung der Folie und ihre Verwendung.

Um ein Verkleben von beispielsweise beidseitig klebenden Klebebändern bei ihrem Aufwickeln oder Aufeinanderlegen zu vermeiden, ist es bekannt, als Trennfolie (Release-Folie oder Zwischenlage) Kreppapier, geprägtes Papier oder Papier mit beidseitig aufgebrachten Silikonschichten einzusetzen. Wenn auch die genannten Papier-Trennfolien in vielen Fällen genügen mögen, so besteht dennoch ein großes Bedürfnis nach Trennfolien aus thermoplastischen Kunststoffen wie Polypropylen.

Es sind auch schon ein- und mehrschichtige Folien aus Polypropylen bekannt. So wird in der DE-A-32 16 603 eine dreischichtige, biaxial orientierte Polypropylenfolie beschrieben, die aus einer Basisschicht und zwei bezüglich ihrer Zusammensetzung und ihrer Dicke gleichen Deckschichten besteht (die Basisschicht ist beidseitig mit je einer Deckschicht versehen). Die bekannten ein- und mehrschichtigen Polypropylenfolien lassen jedoch im Hinblick auf ihre dehäsiven Eigenschaften noch manches zu wünschen übrig. In der DE-A-32 47 999 ist eine polyolefinische Mehrschichtfolie mit niedriger Siegelanspringtemperatur beschrieben. Die Deckschicht dieser Folie weist ein niedrigmolekulares Harz auf. Trennfolien für Klebebandzwecke sind dort nicht beschrieben. Es besteht somit nach wie vor ein großes Bedürfnis nach Polypropylenfolien, die auch als Trennfolien geeignet sind.

Der Erfindung liegt deshalb die Aufgabe zugrunde, eine dreischichtige, biaxial orientierte Polypropylenfolie zu schaffen, die eine vorteilhafte und vielseitig einsetzbare Trennfolie darstellt, die insbesondere preisgünstig herstellbar ist und die gleichzeitig hervorragende antiadhäsive Eigenschaften gegenüber den gebräuchlichsten Klebstoffen besitzt und sich daher leicht und ohne die Gefahr von Einrissen oder Abrissen von dem Klebeband abziehen läßt.

Gelöst wird diese Aufgabe durch eine Folie der eingangs genannten Gattung, die dadurch gekennzeichnet ist, daß die Basisschicht aus einem Propylenhomopolymeren oder aus einem Propylencopolymeren oder aus einer Mischung aus Propylenhomo- und/oder Propylencopolymer besteht, wobei der Comonomeranteil, bezogen auf das Copolymer bis zu 20 Gew.-% beträgt, und die beiden Deckschichten aus einem Propylenhomopolymeren oder aus einem Propylencopolymeren oder aus einer Mischung aus Propylenhomo- und/oder Propylencopolymer, wobei der Comonomeranteil, bezogen auf das Copolymer bis zu 20 Gew.-% beträgt, als Hauptkomponente und 0,5 bis 5 Gew.-%, bezogen auf die Deckschicht, von einem Polydiorganosiloxan als antiadhäsiven Wirkstoff besteht.

Jede der beiden Deckschichten enthält erfindungsgemäß ein Polydiorganosiloxan als antiadhäsiven Wirkstoff. Das Polydiorganosiloxan ist in der Regel ein Polydialkylsiloxan, wobei Polydi($C_1$-$C_4$)-alkylsiloxane bevorzugt sind. Polydimethylsiloxan ist besonders bevorzugt. Das Polydiorganosiloxan hat eine Viskosität von mindestens 100 mm$^2$/s bei 25°C, vorzugsweise 1 000 bis 100 000 mm$^2$/s, insbesondere 5000 bis 50 000mm$^2$/s.

Die Menge an Polydiorganosiloxan in den Deckschichten beträgt jeweils vorzugsweise 1 bis 3 Gew.-%, bezogen auf die Deckschicht.

Nach einer bevorzugten Ausführungsform enthalten die Deckschichten (das heißt jede der beiden Deckschichten) neben dem Polydiorganosiloxan auch noch 1 bis 20 Gew.-%, vorzugsweise 3 bis 15 Gew.-%, bezogen auf die Deckschicht, von einem anorganischen Pigment. Bei einer solchen Ausführungsform der erfindungsgemäßen Trennfolie bestehen also die beiden Deckschichten jeweils im wesentlichen aus Polypropylen als Hauptkomponente, 0,5 bis 5 Gew.%, vorzugsweise 1 bis 3 Gew.-%, bezogen auf die Deckschicht, von einem Polydiorganosiloxan und 1 bis 20 Gew.-%, vorzugsweise 3 bis 15 Gew.-%, bezogen auf die Deckschicht, von einem anorganischen Pigment.

Das anorganische Pigment in den Deckschichten ist vorzugsweise Bariumsulfat, Calciumcarbonat, Alkalimetallsilicat, Aluminiumsilicat, Alkalimetall-Aluminiumsilicat, Siliciumdioxid oder Titandioxid oder eine Mischung aus zwei oder mehreren dieser Pigmente. Die mittlere Teilchengröße (der mittlere Teilchendurchmesser) der pulverförmigen Pigmente liegt im Bereich von 0,1 bis 5 $\mu$m, vorzugsweise im Bereich von 0,2 bis 2 $\mu$m.

Die erfindungsgemäße dreischichtige Polypropylen-Trennfolie ist biaxial orientiert (gestreckt), wobei das Längsstreckverhältnis vorzugsweise 4 bis 7 : 1 und das Querstreckverhältnis vorzugsweise 7 bis 10 : 1 beträgt.

Die Dicke der erfindungsgemäßen Trennfolie kann innerhalb weiter Grenzen variieren. Sie liegt im allgemeinen im Bereich von 15 bis 50 $\mu$m, vorzugsweise 25 bis 40 $\mu$m (Gesamtdicke). Die Dicke der antiadhäsiven Deckschichten beträgt jeweils 0,5 bis 5 $\mu$m, vorzugsweise 1 bis 2 $\mu$m.

Das Polypropylen, aus dem erfindungsgemäß die Basisschicht und die Deckschichten gebildet sind, kann ein Homo- oder ein Copolymeres (Blockcopolymeres oder statistisches Copolymeres) des Propylens oder eine Mischung aus Propylenhomo- und/oder Propylencopolymeren sein. Der Comonomeranteil beträgt bis zu 20 Gew.-%, vorzugsweise bis zu 10 Gew.-%, bezogen auf das Copolymere. Geeignete Comonomere sind Ethylen und $C_4$-$C_6$-$\alpha$-Olefine, wobei Ethylen bevorzugt ist.

Als Polypropylen werden vorzugsweise Propylenhomopolymere und Copolymere des Propylens mit bis zu 10 Gew.-% Ethylen als Comonomeres eingesetzt.

Die Herstellung der erfindungsgemäßen Trennfolie erfolgt nach dem bekannten Coextrusionsverfahren. Dabei werden die den Schichten der Folie entsprechenden Schmelzen durch eine Flachdüse coextrudiert, die coextrudierte Folie zur Verfestigung abgekühlt, die verfestigte Folie biaxial verstreckt, in Längsrichtung vorzugsweise um das 4- bis 7fache und in Querrichtung vorzugsweise um das 7- bis 10fache, und die biaxial gestreckte Folie thermofixiert. Zunächst werden also die der Basisschicht und den beiden Deckschichten entsprechenden Mischungen (Formmassen) durch Mischen der einzelnen Komponenten bereitet.

Diese Mischungen werden in einem Extruder verflüssigt und komprimiert. Die erhaltenen Schmelzen werden dann gleichzeitig durch eine Flachdüse (Breitschlitzdüse) gepreßt, und die ausgepreßte mehrschichtige Folie wird auf einer oder mehreren Walzen, die durch Kühlung auf etwa 30 bis 50°C gehalten werden, abgekühlt und verfestigt. Die Längsstreckung wird vorzugsweise bei einer Folientemperatur von 120 bis 140°C durchgeführt, die Querstreckung vorzugsweise bei einer Folientemperatur von 160 bis 180°C. Die biaxiale Streckung kann simultan oder nacheinander vorgenommen werden, sie wird vorzugsweise nacheinander, und zwar zuerst längs und dann quer vorgenommen. Das Längsstrecken wird man zweckmäßigerweise mit Hilfe zweier entsprechend dem angestrebten Streckverhältnis verschieden schnell laufender Walzen durchführen und das Querstrecken mit Hilfe eines entsprechenden Kluppenrahmens. Zur Thermofixierung (Wärmebehandlung) wird die Folie etwa 0,5 bis 10 s lang bei einer Temperatur von 150 bis 160°C gehalten.

Die erfindungsgemäße biaxial gestreckte, symmetrisch aufgebaute, coextrudierte Polypropylen-Dreischichtfolie stellt eine besonders vorteilhafte und vielseitig einsetzbare Trennfolie dar. Sie wird vorzugsweise als Trennfolie für beidseitig klebende Klebebänder verwendet.

Die Erfindung wird nun an Beispielen noch näher erläutert.

Beispiel 1

Mit Hilfe des Coextrusionsverfahrens wurde bei einer Extrusionstemperatur von etwa 260°C aus einer Breitschlitzdüse eine dreischichtige Polypropylenfolie mit einer Basisschicht und zwei Deckschichten extrudiert, wobei die Schmelze für die Basisschicht aus einem Propylenhomopolymeren bestand und die Schmelzen für die beiden Deckschichten jeweils aus einem Propylenhomopolymeren (99 Gew.-%) und 1 Gew.-%, bezogen auf die Deckschicht, von einem Polydimethylsiloxan mit einer Viskosität von 10 000mm$^2$/s bei 25°C bestanden. Die auf der Abzugswalze verfestigte Folie wurde in einem Heizkanal auf Strecktemperatur gebracht und zunächst bei 125°C um den Faktor 5 längsgestreckt und anschließend bei 165°C um den Faktor 9 quergestreckt. Die nachfolgende Thermofixierung erfolgte bei 160°C 5 s lang.

Die dreischichtige Polypropylenfolie aus einer Basisschicht aus einem Propylenhomopolymeren und zwei Deckschichten, bestehend jeweils aus einem Propylenhomopolymeren (99 Gew.-%) und 1 Gew.-%, bezogen auf die Deckschicht, von dem genannten Polydimethylsiloxan war 30 $\mu$m dick, wobei die Dicke der Deckschichten jeweils 2 $\mu$m betrug.

Beispiele 2 bis 5

In jedem dieser Beispiele wurde wie im Beispiel 1 vorgegangen, wobei sich jedoch die Schmelzen für die Deckschichten von denen des Beispiels 1 unterschieden. Im Unterschied zu Beispiel 1 bestanden die Deckschichten aus den in der nachstehenden Zusammenfassung angegebenen Komponenten.

EP 0 216 300 B1

| Beispiel | Deckschichten |
|---|---|
| 2 | 97 Gew.-% Propylenhomopolymeres<br>3 Gew.-% Polydimethylsiloxan |
| 3 | 95 Gew.-% Propylencopolymeres aus 95 Gew.-% Propylen und 5 Gew.-% Ethylen<br>5 Gew.-% Polydimethylsiloxan |
| 4 | 96 Gew.-% Propylenhomopolymeres<br>1 Gew.-% Polydimethylsiloxan<br>3 Gew.-% Calciumcarbonat (Kreide) mit einer mittleren Teilchengröße von 1 $\mu$m |
| 5 | 87 Gew.-% Propylenhomopolymeres<br>3 Gew.-% Polydimethylsiloxan<br>10 Gew.-% Calciumcarbonat (Kreide) mit einer mittleren Teilchengröße von 2 $\mu$m |

Die erfindungsgemäßen Folien der Beispiele 1 bis 5 wurden auf ihre Eignung als Trennfolie für beidseitig klebende Klebebänder getestet.

Alle fünf Folien stellten hervorragende Trennfolien dar. Sie besaßen eine hohe Trennwirkung gegenüber jedem der derzeit gebräuchlichen Klebstoffe für ein- oder beidseitig klebende Klebebänder.

**Patentansprüche**

1. Dreischichtige, biaxial orientierte Polypropylen-Trennfolie aus einer Basisschicht und zwei Deckschichten, wobei die beiden Deckschichten im wesentlichen die gleiche Zusammensetzung und die gleiche Dicke aufweisen, dadurch gekennzeichnet, daß die Basisschicht aus einem Propylenhomopolymeren oder aus einem Propylencopolymeren oder aus einer Mischung aus Propylenhomo- und/oder Propylencopolymer besteht, wobei der Comonomeranteil, bezogen auf das Copolymer bis zu 20 Gew.-% beträgt, und die beiden Deckschichten aus einem Propylenhomopolymeren oder aus einem Propylencopolymeren oder aus einer Mischung aus Propylenhomo- und/oder Propylencopolymer, wobei der Comonomeranteil, bezogen auf das Copolymer bis zu 20 Gew.-% beträgt, als Hauptkomponente und 0,5 bis 5 Gew.-%, bezogen auf die Deckschicht, von einem Polydiorganosiloxan als antiadhäsiven Wirkstoff besteht.

2. Trennfolie nach Anspruch 1, dadurch gekennzeichnet, daß das Polydiorganosiloxan ein Polydi($C_1$-$C_4$)-alkylsiloxan ist.

3. Trennfolie nach einem der Ansprüche 1 oder 2, dadurch gekennzeichnet, daß das Polydiorganosiloxan Polydimethylsiloxan ist.

4. Trennfolie nach einem der Ansprüche 1 bis 3, dadurch gekennzeichnet, daß das Polydiorganosiloxan eine Viskosität von mindestens 100 mm$^2$/s bei 25°C aufweist.

5. Trennfolie nach einem der Ansprüche 1 bis 4, dadurch gekennzeichnet, daß die Menge an Polydiorganosiloxan 1 bis 3 Gew.-%, bezogen auf die Deckschicht, beträgt.

6. Trennfolie nach einem oder mehreren der Ansprüche 1 bis 5, dadurch gekennzeichnet, daß die beiden Deckschichten jeweils 1 bis 20 Gew.-%, bezogen auf die Deckschicht, von einem anorganischen Pigment enthalten.

7. Trennfolie nach einem oder mehreren der Ansprüche 1 bis 5, dadurch gekennzeichnet, daß die beiden Deckschichten jeweils 3 bis 15 Gew.-%, bezogen auf die Deckschicht, von einem anorganischen Pigment enthalten.

8. Trennfolie nach einem oder mehreren der Ansprüche 1 bis 7, dadurch gekennzeichnet, daß sie eine Dicke von 15 bis 50 $\mu$m aufweist, wobei die Dicke der Deckschichten jeweils 0,5 bis 5 $\mu$m beträgt.

9. Verfahren zur Herstellung einer Folie nach den Ansprüchen 1 bis 8, wobei die Schmelze der die Basisschicht bildenden Polypropylenmischung einerseits und die Schmelzen der die Deckschichten

4

bildenden Polypropylenmischungen andererseits gemeinsam und gleichzeitig durch eine Flachdüse extrudiert werden, die coextrudierte Folie zur Verfestigung abgekühlt, die verfestigte Folie durch Strecken in Längs- und Querrichtung biaxial orientiert und die biaxial orientierte Folie thermofixiert wird.

10. Verwendung der Folie nach einem der Ansprüche 1 bis 8 als Trennfolie für beidseitig klebende Klebebänder.

**Claims**

1. A three-layered, biaxially oriented polypropylene release film comprised of a base layer and two top layers, with the composition and thickness being essentially the same for each top layer, characterized in that the base layer comprises a propylene homopolymer or a propylene copolymer or a propylene homopolymer/propylene copolymer blend, with the amount of comonomer, relative to the copolymer, being up to 20 % by weight, and in that the two top layers comprise, as the main component, a propylene homopolymer or a propylene copolymer or a propylene homopolymer/propylene copolymer blend, with the amount of comonomer, relative to the copolymer, being up to 20 % by weight, and 0.5 to 5 % by weight, relative to the weight of the respective top layer, of a polydiorganosiloxane as the anti-adhesive agent.

2. The release film as claimed in claim 1, characterized in that the polydiorganosiloxane is a polydi($C_1$-$C_4$)-alkyl siloxane.

3. The release film as claimed in claim 1 or 2, characterized in that the polydiorganosiloxane is polydimethyl siloxane.

4. The release film as claimed in any of claims 1 to 3, characterized in that the polydiorganosiloxane has a viscosity of at least 100 $mm^2$/s at 25 °C.

5. The release film as claimed in any of claims 1 to 4, characterized in that the amount of polydiorganosiloxane is 1 to 3 % by weight, relative to the respective top layer.

6. The release film as claimed in one or several of claims 1 to 5, characterized in that each top layer contains 1 to 20 % by weight, relative to the weight of the top layer, of an inorganic pigment.

7. The release film as claimed in one or several of claims 1 to 5, characterized in that each top layer contains 3 to 15 % by weight, relative to the weight of the top layer, of an inorganic pigment.

8. The release film as claimed in one or several of claims 1 to 7, characterized in that it has a thickness of between 15 and 50 $\mu$m, whereby each of the top layers has a thickness of between 0.5 and 5 $\mu$m.

9. A process for producing a film as claimed in claims 1 to 8, which comprises simultaneously extruding through a sheet die the melt of the polypropylene blend forming the base layer and the melts of the polypropylene blends forming the top layers, chilling the coextruded film for solidification, biaxially orienting the solidified film by stretching it in the longitudinal and transverse directions, and heat-setting the biaxially oriented film.

10. Use of the film as claimed in any of claims 1 to 8 as a release film for double-sided adhesive tapes.

**Revendications**

1. Feuille de séparation tricouche en polypropylène, orientée biaxialement, qui comprend une couche de base et deux couches de couverture, les deux couches de couverture présentant pratiquement la même composition et la même épaisseur, caractérisée en ce que la couche de base comprend un homopolymère de propylène ou un copolymère de propylène ou encore un mélange d'homo- et/ou copolymères de propylène, la fraction comonomère pouvant aller jusqu'à 20 % en poids par rapport au copolymère, et les deux couches de couverture comprennent, comme composant principal, un homopolymère de propylène ou un copolymère de propylène ou encore un mélange d'homo- et/ou copolymères de propylène, la fraction comonomère pouvant aller jusqu'à 20 % en poids par rapport au copolymère, et, comme principe actif antiadhésif, de 0,5 à 5 % en poids, par rapport à la couche de couverture, d'un polydiorganosiloxane.

2. Feuille de séparation selon la revendication 1, caractérisée en ce que le polydiorganosiloxane est un polydialkyl($C_{1-4}$)-siloxane.

3. Feuille de séparation selon une des revendications 1 ou 2, caractérisée en ce que le polydiorganosiloxane est un polydiméthylsiloxane.

4. Feuille de séparation selon une des revendications 1 à 3, caractérisée en ce que le polydiorganosiloxane présente une viscosité d'au moins 100 $mm^2$/s à 25°C.

5. Feuille de séparation selon une des revendications 1 à 4, caractérisée en ce que le polydiorganosiloxane est présent à raison de 1 a 3 % en poids par rapport à la couche de couverture.

6. Feuille de séparation selon une ou plusieurs des revendications 1 à 5, caractérisée en ce que les deux couches de couverture renferment, chacune, de 1 à 20 % en poids, par rapport à la couche de couverture, d'un pigment minéral.

7. Feuille de séparation selon une ou plusieurs des revendications 1 à 5, caractérisée en ce que les deux couches de couverture renferment, chacune, de 3 à 15 % en poids, par rapport à la couche de couverture, d'un pigment minéral.

8. Feuille de séparation selon une ou plusieurs des revendications 1 à 7, caractérisée en ce qu'elle présente une épaisseur de 15 à 50 $\mu$m, l'épaisseur des couches de couverture étant de 0,5 à 5 $\mu$m chacune.

9. Procédé de fabrication d'une feuille selon les revendications 1 à 8, dans lequel on extrude ensemble et simultanément, à travers une filière plate, d'une part la masse fondue du mélange de polypropylène formant la couche de base, et d'autre part les masses fondues des mélanges de polypropylène formant les couches de couverture, on refroidit la feuille coextrudée pour la consolider, on oriente biaxialement, par étirage longitudinal et transversal, la feuille consolidée, et on procède au thermofixage de la feuille orientée biaxialement.

10. Utilisation de la feuille selon une des revendications 1 à 8, comme feuille de séparation pour bandes adhésives à double face collante.